# EUROPEAN PATENT APPLICATION

(11) **EP 2 251 797 A2**
(43) Date of publication of application: **17.11.2010**
(21) Application number: 10368020.3
(22) Date of filing: 23.03.2010
(51) Int. Cl.: G06F 17/27

(54) **Recognition of addresses from the body of arbitrary text**

(30) Priority: 24.03.2009 US 383373
(71) Applicant: Mireo d.o.o., 10000 Zagreb (KR)
(72) Inventor: Siladic, Ivica, Zagreb (HR)
(74) Representative: Schuffenecker, Thierry

(57) **Abstract**

A method of analyzing words in an arbitrary text document comprises identifying a candidate name of an inhabited area in an arbitrary text, searching and isolating strings to the left and the right of the candidate name, comparing these strings to a map database comprising addresses containing the candidate name, and thereby determining a complete address from the strings matching the map database and the candidate name. A method for searching for a service or product on the World Wide Web comprises providing a global database of web pages indexed by words and locations. The global database is searched using keywords describing the service or product and using a search location. The search process returns a list of web pages matching the keywords and the search location.

## Description

### Technical field

This invention relates to extraction of the words representing an address from the body of arbitrary text and, more particularly, to methods of inferring a likely address from the body of the text included on web pages posted on the Internet.

### Background Art

Today, many business and other organizations or private individuals post information on the Internet including their activities, products and services along with an address that can be used to contact them via regular mail.

It may be of interest to the users of the Internet to look for businesses, services and products in their own vicinity or in the vicinity of an area that they want to visit.

The problem to be solved is identification of an address included on an Internet web page and creation of a link to the address identified on the web page with the product or service described on that same web page.

U.S. Patent 7,257,570 (Riise et al) discloses inferring a likely geographic location from a query and comparing the likely location to a place name database. Probabilities are assigned to each location in the database based on country and location statistics. The invention also assigns probabilities to possible location names. However, this patent does not teach or suggest further parsing strings to the right and left of the location names and comparing these strings to a map database to determine a complete address.

U.S. Patent 6,701,307 (Himmelstein et al) teaches an address extraction process for a web page. The process locates a clearly recognizable anchor (such as a postal code) and examines text on both sides of the anchor to ascertain the address. The process looks for state, city, then street address. It may compare the state to a table of states or the combination of state and postal code to a table. Common forms of street addresses are used to parse the street address string. However, this patent requires an anchor to work. A web page may contain a valid address without the anchor (for example, no postal code or zip code).

U.S. Patent Application 2005/0065916 (Ge et al) discusses determining distance to a location wherein the location is retrieved by a search engine, but no details are given on how the location is extracted.

U.S. Patent Application 2006/0149774 (Egnor) states that a geographic location may be determined such as from the postal address on a web page, but there are no details as to how the address is extracted.

U.S. Patent Application 2002/0138525 (Karadimitriou et al) discloses a method to determine if web page content includes contact information. If so, the contact information is passed to an address extraction tool, not described.

### Summary of the invention

It is a primary object of the present invention to provide a mechanism for the identification of the address within the body of text of arbitrary length.

It is another object of the invention to identify an address within the body of a web page and to create a link to the web page.

It is a further object of the invention to create a global database of content and products that uses publicly available information from the Internet.

A still further object of the invention is to store the address extracted from any particular website with that particular website in a database.

Yet another object is to provide a means for searching for a service or product on the Internet using keywords describing that service or product and identifying the providers of such service or products in the geographical area of interest. The geographical area of interest can be specified by means of the name of the geographical location or automatically by means of the coordinates of the present position of the person obtained through Global Positioning System (GPS) or other location identifying sensors.

Yet another object of the invention is to perform a word analysis of web pages to find possible place names in the web pages. Strings to the left and right of the possible place names are compared to a map database that consists of addresses to determine an address from the web page.

A further object of the present invention is to provide a computer program comprising computer program code, or code adapted to perform all the steps of the means for identifying addresses from web pages when the program is run on a computer.

In accordance with the objects of this invention a method of analyzing words in an arbitrary text document is achieved. The method comprises identifying a candidate name of an inhabited area in an arbitrary text, searching and isolating strings to the left and the right of the candidate name, comparing these strings to a map database comprising addresses containing the candidate name, and thereby determining a complete address from the strings matching the map database and the candidate name.

Also in accordance with the objects of the invention, a computer-readable medium containing a set of instructions for a general purpose computer to infer a likely address from an arbitrary text is achieved. The method comprises determining which parts of a text comprise names of inhabited areas, providing an indicator of the extent to which a given search term or part thereof should be treated as a name of an inhabited area, returning a list of adjacent strings to the parts of the text likely representing the name of inhabited areas, arranging the strings in a manner that allows template matching with strings from an address database for any particular geographic area, and returning an address isolated from the arbitrary text based on the identified match of the address from the address database.

Also in accordance with the objects of the invention, a method for searching for a service or product on the World Wide Web is achieved. A global database of web pages indexed by words and locations is provided. The global database is searched using keywords describing the service or product and using a search location. The search process returns a list of web pages matching the keywords and the search location.

### Description of the drawings

In the accompanying drawings forming a material part of this description, there is shown:

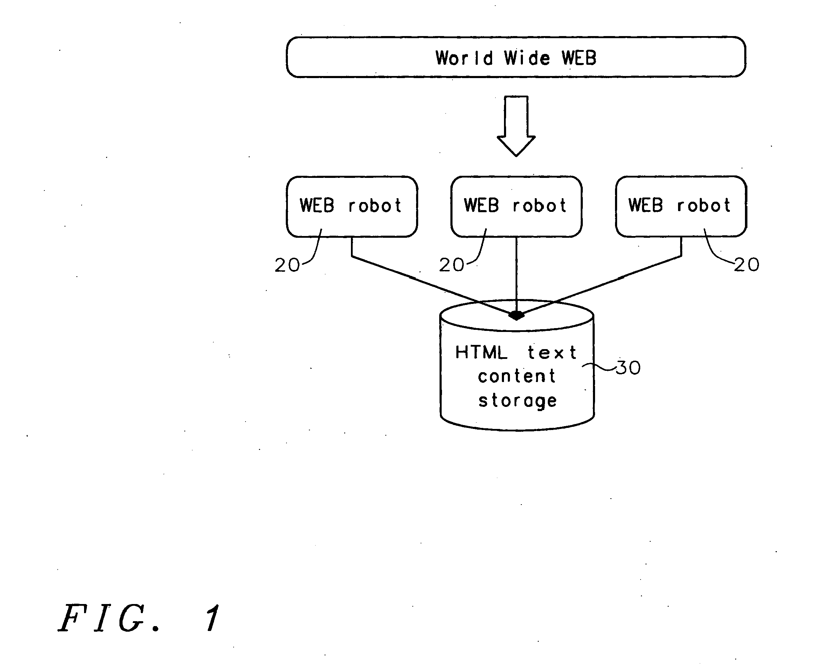

Figs. 1 through 5 schematically illustrate in cross-sectional representation steps in the process of the present invention.

### Description of the preferred embodiments

The present invention proposes a method for extraction of the words representing a likely address from the body of arbitrary text included on web pages posted on the World Wide Web, or the Internet.

If someone wants to get information on the providers of a particular service or product in a particular area, the invention allows the search of the service or product on the World Wide Web using keywords describing that service or product. The invention can also identify the providers of such service or products in the area of interest of the person performing the search, specifying the area by means of the name of the geographical location or automatically by means of the coordinates of the present position of the person obtained through GPS (Global Positioning System) or other location identifying sensors. The World Wide Web, or Internet, may be accessed in various ways, including personal computers, phones (especially mobile phones or cellular phones), and Personal Navigation Devices (PND) or Global Positioning System (GPS) devices, and so on.

Referring now to Fig. 1, there is shown a schematic representation of a first step in the process of the invention. A global database is created by an automated program that crawls through the Internet and collects information on various web pages found. Web robots 20 collect information from web pages and store the HTML text content in global database 30. The global database can be updated every week, for example. The frequency of updates will determine the precision of the search. For example, if a restaurant goes out of business, their web page may disappear and the index pointing to that restaurant must be removed. As another example, a business may change its location. If the address associated with the business cannot be found, the indexing process will restart with a new address search algorithm

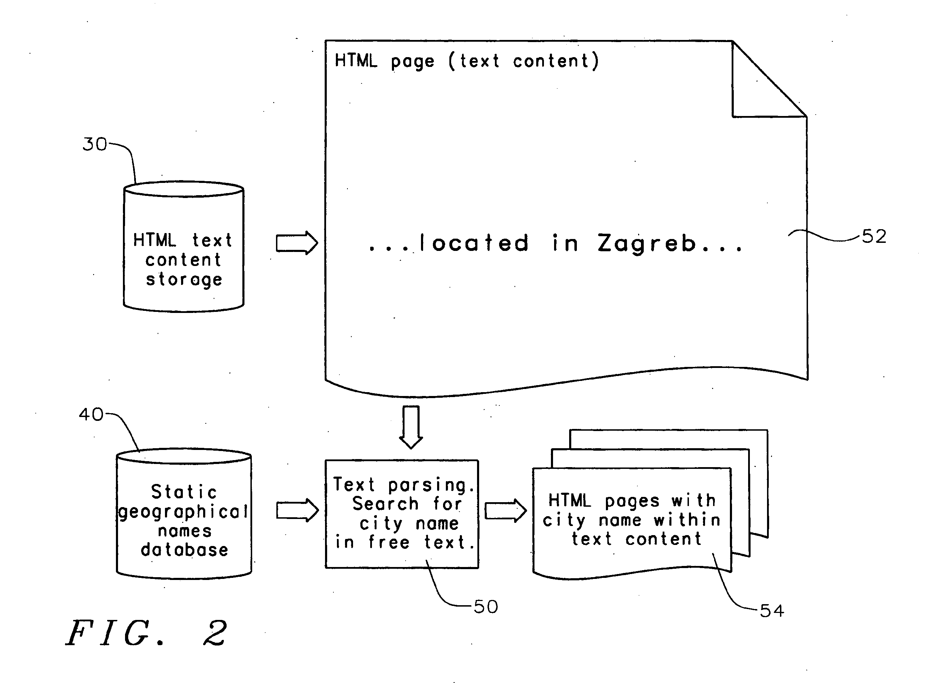

Referring now to Fig. 2, the content of each page of the global database 30 is analyzed. The text parser 50 searches through the text on a page (for example, page 52) and compares every word with the names of cities or other place names that are stored in an internal database, the static geographical names database 40. If no city name is found on the page, the page is discarded from the database 30. If a place name is found on the page, the page is saved for further analysis in 54.

In the analysis of the names of villages, towns, cities, and other inhabited areas of the country, the meaning of such names in any language spoken in the analyzed country is unique. In other words, such names, with very high probability, are used only as the names of inhabited areas and have no other meaning in any particular language

Preferably the step of word analysis to determine which parts of a text comprise a name of an inhabited area provides an indicator of the extent to which a given string should be treated as a name of an inhabited area by assigning a higher probability that such a string is a name of an inhabited area and a lower probability that the search term is a not the name of an inhabited area.

For instance, in the English language, names like Birmingham, York, Manchester, Boston, Austin, Dallas, Miami, Atlanta, Liecester, and so on, are used only as the names of cities or villages. There are obviously names of cities that have other meanings. London, for instance, can be the name of a person; St. Louis, St. Charles and similar names can be the names of the saints, and so on. In the process of the invention, a probability is assigned to each location name that the name is really the name of a city or other location based on the usage of the particular name in the particular language. So in case of Birmingham, the probability would be very high (arbitrarily, it can be set to 99%) and, in case of London, the probability might be 50% (there is a chance that this word was used in the text as the name of a person), and so on. The probability is assigned in the process of matching the candidate words against the database 40 that contains all the names of all the cities and streets in those candidate cities. As soon as a match is found, the probability that the word is the name of the city increases to a value higher than 0.

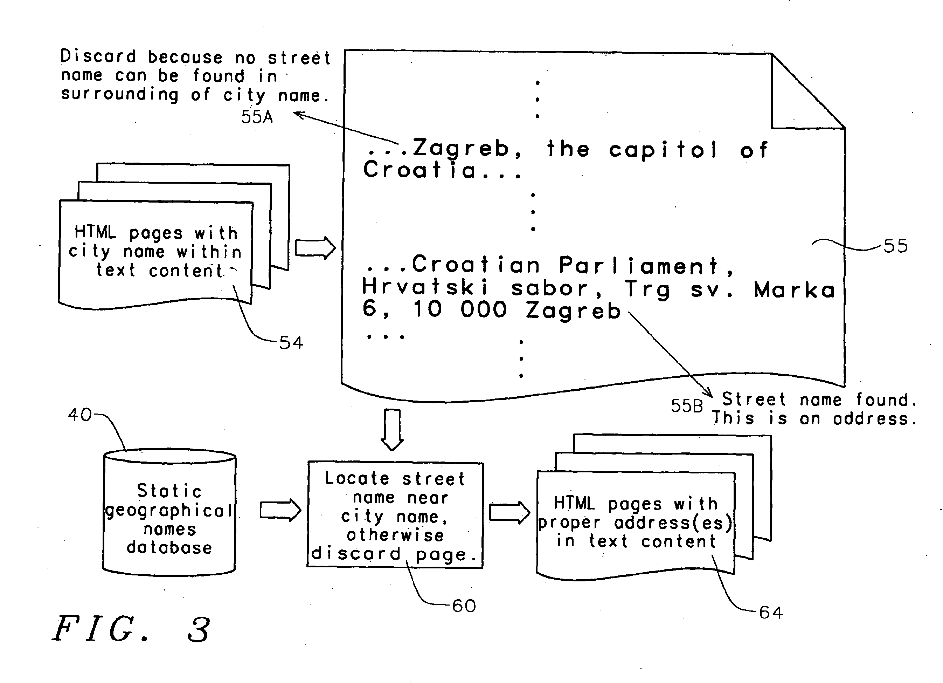

Next, as shown in Fig. 3, if a match is found for a place name on a web page 54, the text parser 60 analyzes the text around the word that was recognized as the name of a city or place to find the complete address. The text parser compares the words around the recognized place name with the names of streets from the database of addresses 40. Page 55 is an example of one of the pages 54 containing a candidate place name.

The text parser 60 searches and isolates the strings to the left and the right of the candidate name. The strings in the vicinity of the candidate name of the inhabited areas are compared to the map database that consists of addresses of place names. The section of the map database containing addresses (street name, square name etc.) for the candidate place name is searched. The map database can be provided by various map providers. Matching a string from the database with the candidate string provides an indicator of the extent to which a given string should be treated as a complete address recognized from the body of the arbitrary text. If the sequence of the words in the database loosely matches the sequence of the words in the arbitrary text then that part of arbitrary text is proclaimed the address. If all the words exactly match, the probability that it is an address is very large. If it is determined that an address has been found, the secondary probability for city name is set higher than the initial probability.

In the example of page 55, the candidate place name is «Zagreb.» The text strings to the left and right of «Zagreb» are parsed. The string 55A is discarded because no street name can be found in the vicinity of the city name. The string 55B is found to contain a street name that matches a street in the database of street names in Zagreb. Next, the numbers are checked against house numbers or zone numbers, etc., in the database. If there is a match, or the number is within the range of house numbers on the street, for example, an address is found. So, this page is included in the list of pages 64 containing addresses.

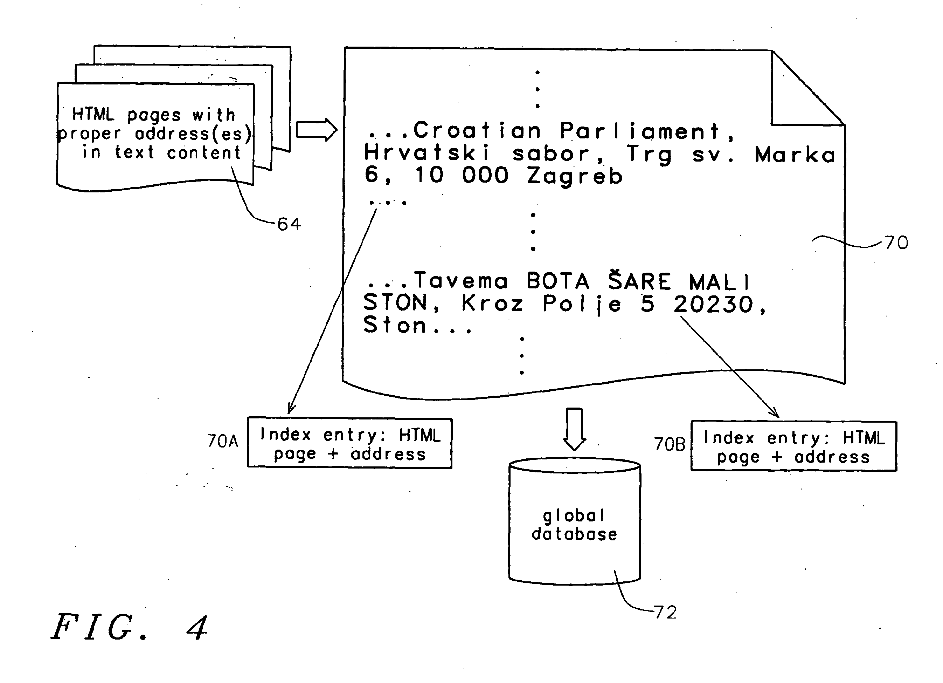

An index 70 is created linking the pages 64 containing address information with the physical address printed on the page. The address is also geocoded; that is, a latitude and longitude for the addressed is calculated and stored in the index 70. Fig. 4 shows the index 70 with sample entries 70A and 70B. Entry 70A is the address found on example page 55 in Fig. 3. This step creates a database 72 containing links to HTML web pages containing addresses indexed by location and by geocode.

All of the preceding steps are performed prior to searches by users. As indicated above, these steps to create the global database 72 can be performed, for example, once a week, or on some other schedule.

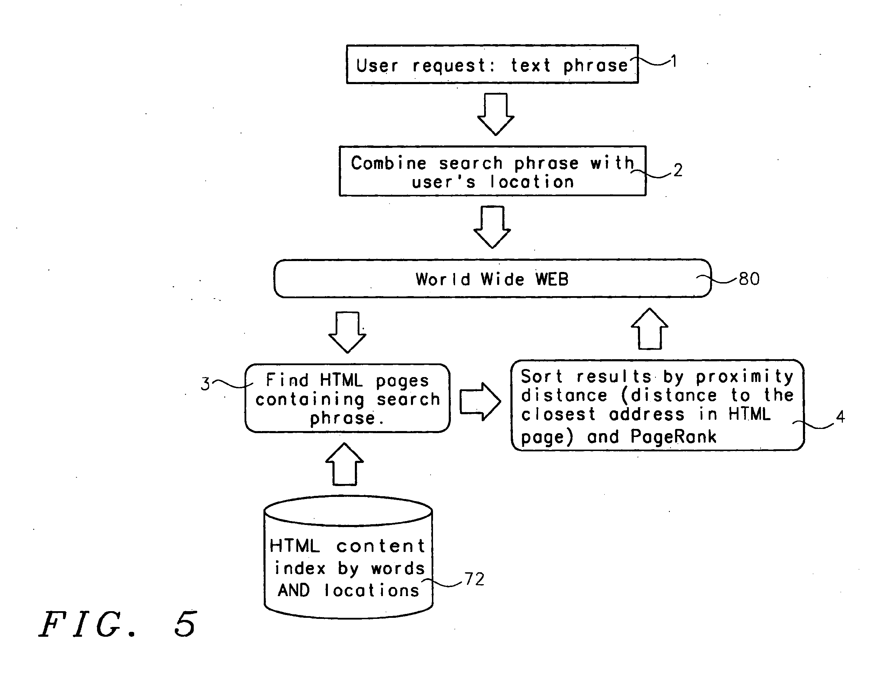

Fig. 5 illustrates the process in which a user initiates a search for a business or service in a specified location. In step 1, a user request is entered. For example, this can be a request for a particular type of product or service in a particular location.

The parsing steps used above to create the global database are also used to parse the search string to determine if the request contains a place name. The search request string could also include an address. Parsing continues to determine whether or not an address is specified.

If the user does not include a place name in the request, the user's location is determined such as by GPS or other location identifying sensor and that location is combined with the search phrase in step 2.

In step 3, the World Wide Web 80 is accessed. Web pages containing the search phrase are located. The global database 72 created earlier is accessed to find those web pages containing the search phrase that also contain the search location. If the user has specified a city or region, locations within that city or region are returned. If the user wants to search "near me," a GPS location is used as the search location. Web pages containing addresses near the user's GPS location are returned.

In step 4, the resulting web pages are sorted by proximity distance to the search location.

The present invention provides a computer program comprising computer program code or code adapted to perform all the steps of the preceding methods when the program is run on a computer. Preferably, the computer program is embodied on a computer readable medium. The text parsing process of the present invention is used to create the global database and also to parse a user's search request. To summarize the text parsing process, word analysis techniques are used to determine which parts of a text comprise names of inhabited areas and provide an indicator of the extent to which a given search term or part thereof should be treated as a name of an inhabited area. The names of inhabited areas are ranked in accordance with the probability that the name of an inhabited area is likely to be isolated. A list of adjacent strings in the neighborhood of an isolated string likely representing the name of an inhabited area is created. The strings are arranged in a manner that allows template matching with the strings from the address database for any particular geographic area. The result of this process is the address isolated from the arbitrary text based on the identified match of the address from the database and the strings from the isolated text likely representing the same address.

While the invention has been particularly shown and described with reference to the preferred embodiments thereof, it will be understood by those skilled in the art that various changes in form and details may be made without departing from the spirit and scope of the invention.

## Claims

1. A method of analyzing words in an arbitrary text document comprising:
- identifying a candidate name of an inhabited area in said arbitrary text;
- searching and isolating strings to the left and to the right of said candidate name;
- comparing said strings to a map database comprising addresses containing said candidate name; and
thereby determining a complete address from said strings matching said map database and said candidate name.

2. The method according to claim 1, wherein said step of identifying said candidate name includes providing an indicator of the extent to which a given string should be treated as a name of an inhabited area.

3. The method according to claim 1, wherein said arbitrary text document is a web page.

4. The method according to claim 3 further comprising storing said complete address along with a link to the web page containing said address.

5. The method according to claim 4 further comprising geocoding said complete address and storing geocoded said address along with said address and said link to said web page containing said address.

6. The method according to claim 5 further comprising:
creating a searchable global database comprising:
- complete addresses found in web pages;
- links to said web pages; and
- geocoded said addresses
wherein said searchable global database is created by said analyzing words in web pages.

7. A computer-readable medium containing a set of instructions for a general purpose computer to infer a likely address from an arbitrary text comprising:
- determining which parts of a text comprise names of inhabited areas;
- providing an indicator of the extent to which a given text or part thereof should be treated as a name of an inhabited area;
- returning a list of adjacent strings to said parts of said text likely representing a name of an inhabited area;
- arranging said strings in a manner that allows template matching with strings from an address database for any particular geographic area; and
- returning an address isolated from said arbitrary text based on the identified match of the address from said address database.

8. The computer program according to claim 7, wherein said indicator is set based on preset probabilities assigned to names of geographic locations in a database specific to the country being searched and to the language spoken in said country.

9. A method for searching for a service or product on the Internet comprising:
- providing a global database of web pages indexed by words and locations;
- searching said global database using keywords describing said service or product and using a search location; and
- returning a list of web pages matching said keywords and said search location.

10. The method according to claim 9 wherein said providing said global database is performed prior to said searching.

11. The method according to claim 9 wherein said providing said global database is performed at preset intervals of time.

12. The method according to claim 9 wherein said providing a global database of web pages indexed by words and locations comprises:
- collecting from the World Wide Web web pages containing text;
- identifying those web pages containing an address;
- geocoding said addresses; and
- creating said global database storing said web pages containing an address, links to said web pages, and geocoded said addresses.

13. The method according to claim 12 wherein said identifying said web pages containing an address comprises:
- identifying a candidate name of an inhabited area in said web page;
- searching and isolating strings to the left and to the right of said candidate name;
- comparing said strings to a map database comprising addresses containing said candidate name; and
thereby determining a complete address from said strings matching said map database and said candidate name.

14. The method according to claim 13, wherein said step of identifying said candidate name includes providing an indicator of the extent to which a given string should be treated as a name of an inhabited area wherein said indicator depends on preset probabilities assigned to names of geographic locations in a database specific to the country being searched and to the language spoken in said country.

15. The method according to claims 2 or 14 further comprising updating said indicator to a yet higher probability after matching a said string to said map database.

16. The method according to claim 9 wherein said search location is found by determining the current location of a user by using a location identifying sensor.

17. The method according to claim 9 wherein said search location is determined by parsing a user request string wherein said parsing comprises:
- determining which parts of said user request string comprise names of inhabited areas;
- providing an indicator of the extent to which said user request string or part thereof should be treated as a name of an inhabited area;
- returning a list of adjacent strings to said parts of said text likely representing the name of inhabited areas;
- arranging said strings in a manner that allows template matching with strings from an address database for any particular geographic area; and
- returning an address isolated from said arbitrary text based on the identified match of the address from said address database or returning the name of an inhabited area if no strings match an address.

18. The method according to claim 2 or 17, wherein said indicator depends on preset probabilities assigned to names of geographic locations in a database specific to the country being searched and to the language spoken in said country.
